# EUROPÄISCHE PATENTSCHRIFT

(11) **EP 1 266 439 B1**
(45) Veröffentlichungstag und Bekanntmachung des Hinweises auf die Patenterteilung: **02.01.2008**
(21) Anmeldenummer: 01927728.4
(22) Anmeldetag: 15.03.2001
(51) Int. Cl.: H02K 7/06, H02K 5/10

(54) **ELEKTROMOTORISCHER LINEARANTRIEB**
ELECTROMOTIVE LINEAR DRIVE
ENTRAINEMENT LINEAIRE A MOTEUR ELECTRIQUE

(30) Priorität: 20.03.2000 DE 20005050 U
(43) Veröffentlichungstag der Anmeldung: 18.12.2002
(73) Patentinhaber: Dewert Antriebs- und Systemtechnik GmbH, 32278 Kirchlengern (DE)
(72) Erfinder: ROITHER, Andreas, 32130 Enger (DE); BOKÄMPER, Ralf, 32312 Lübbecke (DE); FINKEMEYER, Horst, 49328 Melle (DE); MARTIN, Jürgen, 32257 Bünde (DE)
(74) Vertreter: Dantz, Jan Henning
(86) Internationale Anmeldenummer: PCT/EP2001/002887
(87) Internationale Veröffentlichungsnummer: WO 2001/071891

(56) Entgegenhaltungen:
- DE-A- 3 735 370
- DE-A- 19 816 388
- DE-U- 9 405 297
- US-A- 4 858 481
- US-A- 5 623 176

## Beschreibung

Die Erfindung betrifft einen elektromotorischen Linearantrieb mit ein oder mehreren Antriebsmotoren und einer entsprechenden Anzahl von über die Drehzahl vermindernden Getrieben rotierend antreibbaren Spindeln, wobei die den Antriebszug bzw. die Antriebszüge bildenden Bauteile in einem gemeinsamen, aus mindestens zwei Gehäuseteilen bestehenden Gehäuse angeordnet sind und bei dem die Stromzuführung über ein Netzkabel erfolgt.

Der in Frage kommende Linearantrieb ist besonders zum Antrieb von verstellbaren Bauteilen eines Möbels, beispielsweise eines Lattenrostes geeignet. In der Normalausführung enthält der Linearantrieb zwei Gleichstrommotoren die von einer Handbedienvorrichtung über eine Steuereinheit separat ansteuerbar sind. Auf die beiden Spindeln sind Spindelmuttern aufgesetzt, die gegen Drehung gesichert sind. Die langgestreckten Spindelmuttern wirken auf Anlenkhebel die beispielsweise auf eine Welle des Möbels drehfest aufgesetzt sind.

Derartige Linearantriebe werden nicht nur im häuslichen Bereich eingesetzt, sondern verstärkt auch im Krankenhausbereich sowie in Pflegeheimen. Es ist dann erforderlich, dass das Möbel, beispielsweise ein Kranken- oder Pflegebett in gewissen Zeitabständen oder beim Wechsel eines Patienten gründlich gereinigt bzw. desinfiziert wird. Dies erfolgt üblicherweise in einer Waschstraße. Es muß dann sichergestellt sein, dass keine Reinigungsflüssigkeit in das Innere des Gehäuses dringen kann. Das Gehäuse besteht im Normalfall aus zwei Gehäuseteilen. Je nach Bauart kann das Gehäuse kastenförmig gestaltet und an der Oberseite durch einen Deckel verschlossen sein. In anderer Ausführung besteht es aus zwei Schalen wobei in der Einbaulage die Stoßflächen senkrecht stehen.

Der Erfindung liegt die Aufgabe zugrunde, einen elektromotorischen Linearantrieb der eingangs näher beschriebenen Art in konstruktiv einfacher Weise so zu gestalten, dass zunächst das Gehäuse so abgedichtet wird, dass beim Wasch- oder Reinigungsvorgang keine Flüssigkeit in das Innere eindringen kann und dass darüber hinaus die Möglichkeit besteht, weitere Antriebe oder sonstige Geräte an den Linearantrieb anzuschließen.

Die gestellte Aufgabe wird gelöst, indem zumindest die Stoßflächen der Gehäuseteile vollständig umlaufend oder annähernd vollständig umlaufend durch ein Dichtelement oder durch mehrere Dichtelemente abgedichtet sind. In bevorzugter Ausführung werden die Stoßflächen der beiden Gehäuseteile durch eine Flachdichtung abgedichtet, die der Kontur der Stoßflächen angepaßt ist. Sofern es sich um einen sogenannten Doppelantrieb handelt, sind in den Endbereichen zwei Schieber vorgesehen, die u-förmige Ausnehmungen der Gehäuseteile übergreifen. In den U-förmigen Ausnehmungen liegen im eingebauten Zustand die Wellen des Kopf- und Fußteiles eines Lattenrostes. Mittels der Schieber wird der Linearantrieb am Möbel festgelegt. In diesem Bereich ist das Gehäuse bzw. sind die beiden Gehäuseteile nicht abgedichtet. Der Bereich der Schieber läßt sich durch ein Dichtelement nur mit einem hohen Aufwand abdichten. Es ist deshalb vorgesehen, daß das Gehäuse im Bereich der Schieber nach Art einer Labyrinthdichtung gestaltet ist, so daß auch dieser Bereich als dicht angesehen werden kann. Das Dichtelement bzw. die Dichtelemente muß nicht zwingend eine Formdichtung bzw. müssen nicht zwingend Formdichtungen sein, sondern es könnten auch auf die Stoßflächen Dichtmassen aufgetragen werden, die vorzugsweise dauerelastisch sind.

Insbesondere im Krankenhausbereich oder im Pflegebereich ist es erforderlich, dass weitere Agregate oder Geräte an den Linearantrieb angeschlossen werden. Es ist deshalb vorgesehen, dass an den Gehäuseteilen des Gehäuses außenseitig Anschlußelemente für mechanische und/oder elektrische Bauteile an- oder eingesetzt oder angeformt sind. Dadurch wird die Möglichkeit geschaffen, dass beispielsweise weitere Antriebe, vorzugsweise Einzelantriebe, Handschalter, Kontrollboxen und ähnliche Bauteile an den Linearantrieb angeschlossen werden können. Da die Möglichkeit bereits bei der Herstellung vorgesehen ist, ist eine solche Nachrüstung äußerst einfach und vor allen Dingen auch kostengünstig durchzuführen. Besonders im medizinischen Bereich ist es notwendig, dass die dort eingesetzten Linearantriebe von den Patienten nicht außer Betrieb gesetzt werden können. Es sind deshalb noch verschiedene Sicherungsmöglichkeiten notwendig. So ist vorgesehen, dass das Netzkabel an dem dem Gehäuse zugewandten Ende zur Auswechselbarkeit ein elektrisches Verbindungselement trägt, welches in ein Gegenstück des Gehäuses einsteckbar ist, und dass das elektrische Verbindungselement durch ein Befestigungselement abgedeckt ist, das lösbar vorzugsweise durch Verschrauben mit der zugehörigen Gehäusewand verbunden ist. Als elektrisches Verbindungselement kommt auch eine sogenannte PG-Verschraubung in Betracht. Die Auswechselbarkeit des Netzkabels kann erforderlich werden, wenn beispielsweise eine Ader gebrochen ist, oder wenn weitere an den Linearantrieb angeschlossene Geräte mit elektrischer Energie versorgt werden müssen und das Netzkabel dafür nicht ausgelegt ist. Durch das Befestigungselement ist es nicht möglich, dass der Patient im Normalfall das Verbindungselement aus der Steckdose herauszieht. Sofern die Verbindung mit dem Gehäuse durch Schrauben erfolgt, ist zum Lösen ein Werkzeug erforderlich, welches dem Patienten normalerweise nicht zur Verfügung steht. Um das Netzkabel mit dem Befestigungselement kostengünstig herzustellen ist vorgesehen, dass das Befestigungselement einstückig mit dem Netzkabel ausgebildet ist. Dies läßt sich fertigungstechnisch durch einen entsprechenden Spritzvorgang in einfachster Weise durchführen. Außerdem ist sichergestellt, dass das Befestigungselement nicht verloren geht. Aus Sicherheitsgründen ist es erforderlich, dass der elektromotorische Linearantrieb geerdet wird. Es ist deshalb vorgesehen, dass das Befestigungselement mit einem Erdungsanschluß ausgestattet ist, der vorzugsweise eine Schraube ist. Dieser Erdungsanschluß kann beim Spritzvorgang in das Befestigungselement eingespritzt werden, so dass keine zusätzlichen Arbeitsgänge erforderlich werden. Es ist auch möglich, dass der Endbereich des Netzkabels durch eine Kabelverschraubung mit dem Befestigungselement verbunden ist. Es werden dann keine Zugkräfte auf die Verbindung ausgeübt. Derartige Kabelverschraubungen werden allgemein als PG-Verschraubungen bezeichnet.

Es ist erforderlich, dass die elektrischen Bauteile des Linearantriebes durch Sicherungen abgesichert werden. Bislang sind derartige Sicherungen im Inneren des Gehäuses angeordnet, so dass zum Auswechseln einer defekten Sicherung die Gehäuseteile getrennt werden müssen. Das Auswechseln einer Sicherung ist demzufolge mit einem extrem hohen Aufwand verbunden. Es ist deshalb vorgesehen, dass das Befestigungselement vorzugsweise in Fassungen eingesetzte elektrische Sicherungen abdeckt, so dass nach dem Abnehmen des Befestigungselementes die Sicherung bzw. die Sicherungen ausgewechselt werden können. Es ist jedoch alternativ auch möglich, dass an geeigneter Stelle Fassungen im Gehäuse montiert werden, in der Weise, dass durch Öffnungen hindurch die Sicherungen zugänglich sind. Diese Öffnungen könnten dann ebenfalls durch eine Platte abgedeckt werden. Das Gehäuse bzw. die Gehäuseteile sind normalerweise aus Kunststoff im Spritzgußverfahren hergestellt. Damit die zusätzliche Möglichkeit gegeben ist, über ein externes Kabel noch zusätzliche Schalt- bzw. Steuerungsfunktionen einzuleiten, beispielsweise durch Anschluß eines Netzschalters, ist vorgesehen, dass im Zuge der Herstellung des Gehäuses bzw. der Gehäuseteile mindestens eine Kabelverschraubung (PG-Verschraubung) in den Durchbruch eingesetzt ist. Anstelle der Kabelverschraubung könnte auch das Kabel direkt hindurchgeführt werden, beispielsweise unter Verwendung einer Gummimanschette. Außerdem könnte dem Durchbruch eine Zugentlastung für das Kabel zugeordnet werden. In weiterer Ausgestaltung ist jedoch vorgesehen, dass im Gehäuse wenigstens eine Kammer vorgesehen ist, um einen wiederaufladbaren Akkumulator oder eine Batterie aufzunehmen. Der Akku bzw. die Batterie sollte von außen in diese Kammer einzusetzen sein. Der Akku oder die Batterie kann dann über ein vorzugsweise von außen ansteckbares Kabel von außen her mit dem Antrieb elektrisch gekoppelt werden. Es können auch eingesteckte Kontakte verwendet werden. Es sollte jedoch nicht nur ein Akku oder eine Batterie aufgenommen werden können, sondern auch ein Transformator, vorzugsweise ein sogenannter EI-Kerntransfomator oder ein Ringkerntransformator sein. Besonders beim Einsatz des Linearantriebes im medizinischen Bereich kann es erforderlich sein, dass der Antrieb ausgerückt wird, damit beispielsweise eine nach unten gerichtete Bewegung in äußerst kurzer Zeit durchgeführt werden kann. Diese Ausrückbarkeit erfolgt über einen Hebel oder ein Seil, der durch eine Durchbrechung des Gehäuses geführt ist. Der Hebel kann ein Dreh- oder Schwenkhebel sein.

Die beiden Gehäuseteile bzw. das Gehäuseteil mit dem aufgeschraubten Deckel sind über ein strangförmiges Dichtelement gegeneinander abgedichtet. Ausgenommen davon ist der Bereich des Schiebers bzw. der Schieber. Der Linearantrieb ist demzufolge insgesamt abgedichtet, so dass keine Trennung in einen abgedichteten und undichten Bereich entsteht. Bei den in Frage kommenden Linearantrieben ist es üblich, dass die Motoren gegenüber den Seitenwandungen des Gehäuses vorstehen, da dadurch Material gespart wird und andererseits eine kompakte Bauweise erreicht wird. Es ist deshalb vorgesehen, dass die Motoren durch Hauben oder Kappen überdeckt werden. Diese Hauben oder Kappen werden zweckmäßigerweise mit der Wandung des Gehäuses oder von vorzugsweise zylinderförmigen Ansätzen verrastet. Es werden dann keine zusätzlichen Befestigungselemente, wie Schrauben und dergleichen benötigt. Die Abdichtung dieser Kappen oder Hauben gegenüber dem Gehäuse erfolgt zweckmäßigerweise durch handelsübliche Rundschnurdichtungen oder O-Ringe. Diese Hauben oder Kappen sollten nicht den Motor in der gesamten Länge übergreifen, sondern nur den äußeren Bereich, so dass der restliche Teil des Motors im am Gehäuse angeformten Zylinderabschnitten liegt. Die Abdichtung der Befestigungsplatte für das Netzkabel gegenüber dem Antriebsgehäuse erfolgt vorzugsweise über eine Flachdichtung. Es können jedoch auch entsprechende dauerelastische Dichtmassen verwendet werden.

In weiterer Ausgestaltung ist noch vorgesehen, dass das Gehäuse mit weiteren elektrischen Verbindungselementen ausgerüstet ist, in die entsprechend gestaltete Stecker einsteckbar sind. Diese werden wiederum von einer mit dem Gehäuse lösbar verbundenen Sicherungsplatte abgedeckt. Die Stecker sind ebenfalls gegenüber dem Antriebsgehäuse durch Dichtelemente gedichtet. Vorzugsweise werden dazu O-Ringe verwendet, die sich auf dem jeweiligen Stecker befinden. Es ist jedoch auch möglich, dass die Stecker mittels einer Dichtmasse abgedichtet werden.

Da die in Rede stehenden elektromotorischen Linearantriebe vielfältig eingesetzt werden und auch hohe Anforderungen an die Sicherheit gestellt werden, ist vorgesehen, daß jeder elektromotorische Linearantrieb mit zusätzlichen Aggregaten unterschiedlichster Bauart ausgestattet werden. So ist vorgesehen, daß wenigstens ein Gehäuseteil mit mindestens einer Kammer zur Aufnahme eines elektrischen Gerätes ausgestattet ist. Die Kammer ist bevorzugt an der Außenseite des jeweiligen Gehäuseteils vorgesehen. Das elektrische Gerät kann über Stromspeicher mit elektrischer Energie versorgt werden oder auch durch die Stromversorgung des Linearantriebes. Ein solches Gerät könnte beispielsweise ein Gerät der Unterhaltungselektronik, wie z.B. ein Radio sein. Es könnte jedoch auch ein Sicherheitssensor in die Kammer eingesetzt werden, beispielsweise ein Rauchmelder, ein Feuchtigkeitsmelder oder ähnliche Überwachungssensoren. Die in die Kammer einzusetzenden Geräte können kraft- und/oder formschlüssig darin festlegbar sein. Ferner kann der Linearantrieb noch mit wenigstens einer Aufnahme für eine Werkzeugbox zum Warten des Linearantriebes und/oder einer Ersatzteilbox ausgestattet sein, in der beispielsweise Verschleißteile, wie z.B. Sicherungen, Kabel ggf. auch Leuchtelemente bevorratet werden. Diese Ausnahme kann beispielsweise auch die Kammer zur Aufnahme des elektrischen Gerätes sein, wenn dieses entfällt. Sie kann jedoch auch zusätzlich an einem Gehäuseteil angebracht werden. Diese Kammer sollte jedoch von außen zugänglich sein. Ferner ist vorgesehen, daß an dem Antrieb ein Insektentöter installiert wird. Ferner könnte der Linearantrieb mit einem Diagnosesystem ausgestattet sein. Es wäre dann sinnvoll, wenn der Antrieb mit einem von außen zugänglichen Diagnosestecker ausgerüstet ist, an den ein Prüfgerät anschließbar ist. Ferner könnte der Linearantrieb mit einem Anschluß ein elektrisches Haushaltsgerät, wie z.B. einen Staubsauger ausgestattet sein. Weiterhin könnte der Linearantrieb noch mit einer Programmiereinheit ausgestattet sein, welche für den Patienten unabhängig bzw. nicht zugänglich ist, so daß diese nur von berechtigten Personen programmierbar ist. Da die Linearantrieb auch im Krankenhaus und im Pflegebereich eingesetzt werden können, könnte der Linearantrieb auch mit einer Patrone ausgestattet werden, die Kohlendioxid enthält. Außerdem könnte am Gehäuse ein Feuerlöscher angebracht werden. Ferner könnte der Antrieb mit einem Behältnis, beispielsweise einer Spraydose ausgestattet werden, die ein Desinfektionsmittel enthält. Außerdem könnte der Antrieb mit einem Sprachchip sowie einer Anzeige für Lärm, Licht u.dg1. ausgestattet sein. Sofern der Linearantrieb mit Akkumulatoren oder Batterien betrieben wird, ist auch eine Spannungskontrolle vorgesehen, damit die Akkumulatoren rechtzeitig nachgeladen oder die Batterien rechtzeitig ausgestauscht werden können. Da auch der Linearantrieb sich im Betrieb erwärmt, ist noch in weiterer Ausgestaltung vorgesehen, daß er mit einem zur Luftzirkulation ausgestattet ist, welches auch so ausgestaltet sein kann, daß Wärme erzeugt wird, um ggf. einwirkende Feuchtigkeit zu verdampfen. Je nach dem Einsatzfall kann auch auf das Dichtelement bzw. auf die Dichtelemente zwischen den Stoßflächen verzichtet werden. Es ist deshalb noch vorgesehen, daß die Stoßflächen zumindest an der den Schiebern zugewandten Seite durch ein die Stoßfuge beidseitig übergreifendes Dichtband abgedeckt ist. Dieses Dichtband könnte beispielsweise ein einseitig mit einer Klebebeschichtung ausgestattetes Klebeband sein. Selbstverständlich könnten sich auch die Dichtelemente ausschließlich über den Bereich der Stoßflächen erstrecken, die den Schiebern zugeordnet sind.

Anhand der beiliegenden Zeichnungen wird die Erfindung noch näher erläutert. Es zeigen:
- Figur 1: den erfindungsgemäßen Linearantrieb in Form eines Doppelantriebes in einer Seitenansicht,
- Figur 2: den Antrieb gemäß der Figur 1 in einer Draufsicht und
- Figur 3: den Antrieb gemäß den Figuren 1 und 2 in einer Stirnansicht.

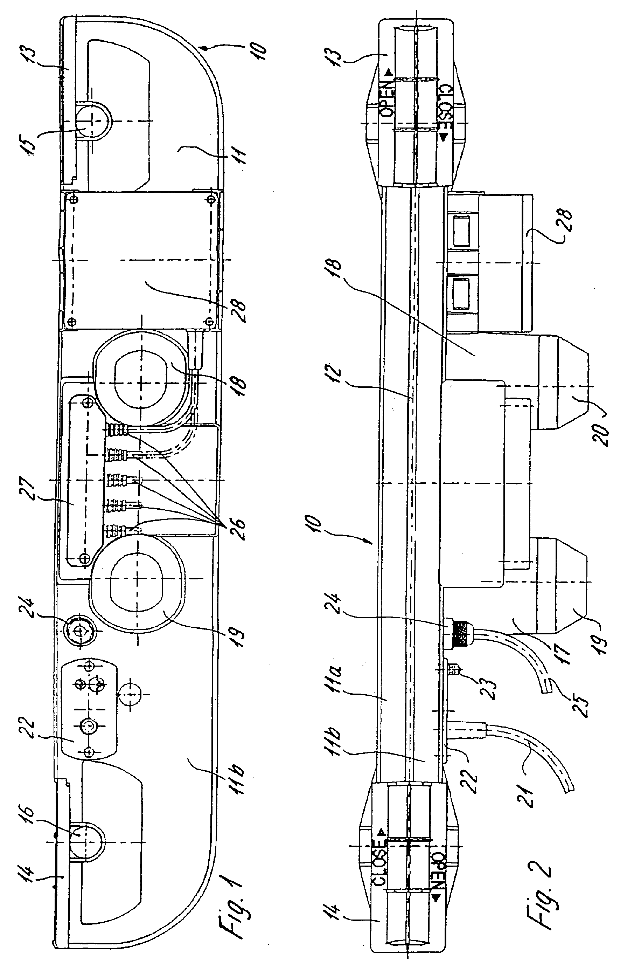

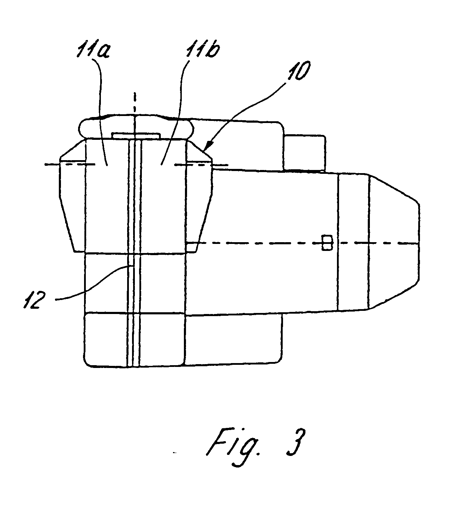

In den Figuren 1 bis 3 ist der elektromotorische Linearantrieb 10 in der Gebrauchslage dargestellt. Das Gehäuse 11 besteht aus zwei Gehäuseteilen oder Gehäusehälften 11a, 11b, die im dargestellten Ausführungsbeispiel in nicht näher dargestellter Weise miteinander derart verbunden sind, dass die Stoßflächen senkrecht stehen. Im Gegensatz zu der dargestellten Ausführung ist es auch denkbar, dass ein Gehäuseteil kastenartig ausgebildet ist und das andere Gehäuseteil ein Deckel ist. Die einander zugewandten Stoßflächen des Gehäuses 11 sind durch ein Dichtelement 12, vorzugsweise in Form einer Flachdichtung gegeneinander abgedichtet. Wie sich aus der Figur 2 ergibt, erstreckt sich das Dichtelement 12 nicht über den Bereich von zwei im Endbereich angeordneten Schiebern 13, 14 die u-förmige Ausnehmungen in den Gehäusewandungen übergreifen, so dass in diesen Ausnehmungen die beiden Wellen 15, 16 eines nicht dargestellten Lattenrostes liegen. Dadurch wird der elektromotorische Linearantrieb 10 an ein Lattenrost angehängt. An das Gehäuse sind zwei zylinderförmige Ansätze 17, 18 angeformt, deren freie Enden offen sind. In diese zylindrischen Ansätze sind in nicht dargestellter Weise die Antriebsmotoren montiert. Die zylindrischen Ansätze sind durch Endkappen 19, 20 verschlossen, die mit den zylindrischen Ansätzen verrastet sind. Dadurch wird die Montage der Motoren erleichtert. In nicht dargestellter Weise sind die Endkappen 19, 20 gegenüber den zylindrischen Ansätzen 17, 18 durch O-Ringe abgedichtet. Im dargestellten Ausführungsbeispiel sind an dem Gehäuseteil 11b, an dem auch die zylindrischen Ansätze 17, 18 angeformt sind, weitere Anschlußmöglichkeiten für mechanische und elektrische Bauteile vorgesehen. Entgegen der Darstellung könnten die Anschlußelemenete auch an dem Gehäuseteil 11b angeordnet sein. Im linken Endbereich ist zunächst ein Anschluß für ein Netzkabel 21 vorgesehen. Im Zuge der Herstellung des Netzkabels 21 wird daran ein Befestigungsflansch 22 angespritzt. In nicht näher dargestellter Weise ist an das gehäuseseitige Ende des Netzkabels 21 ein Stecker festgelegt, der in eine entsprechende Steckdose einsteckbar ist. Der Befestigungsflansch 22 ist mit der Wandung des Gehäuseteils 11b verschraubt. Außerdem ist in den Befestigungsflansch 22 eine aus Metall bestehende Erdungsschraube 23 eingespritzt. Direkt neben dem Befestigungsflansch 22 ist an der dem gegenüberliegenden Endbereich zugewandten Seite in der Wand des Gehäuseteils 11b ein Durchbruch vorgesehen, in den eine Kabelverschraubung, vorzugsweise eine sogenannte PG-Verschraubung eingesetzt ist um eine zusätzliche externe Anschlußmöglichkeit für ein weiteres Kabel 25 zu schaffen. An diese zusätzliche Kabelverschraubung 24 schließen sich fünf weitere Steckdosen an, in die weitere an Kabeln angebrachte Stecker 26 einsteckbar sind. Diese Stecker sind durch eine mit der Gehäusewand verschraubte Sicherungsplatte 27 abgedeckt. Im dargestellten Ausführungsbeispiel liegen diese zusätzlichen Stecker 26 zwischen den beiden zylindrischen Ansätzen 17, 18 für die Motoren. Direkt neben dem zylindrischen Ansatz 18 ist in der Gehäusewand eine Kammer oder mehrere Kammern vorgesehen, um ein oder mehrere Akkus oder Batterien aufzunehmen. Diese Kammer bzw. diese Kammern sind durch einen mit der Gehäusewand verschraubten Deckel 28 verschlossen. Wie die Figur 2 zeigt, bestehen diese Kammern gegenüber der Gehäusewand des Gehäuseteils 11b nach außen vor.

In nicht dargestellter Weise sind die Stecker 26 und auch der Stecker des Netzkabels 21 vorzugsweise durch aufgesetzte O-Ringe abgedichtet. Es kann jedoch auch eine dauerelastische Dichtmasse verwendet werden. Die Erfindung ist nicht auf das dargestellte Ausführungsbeispiel beschränkt. Wesentlich ist die ausreichende Abdichtung und die Möglichkeit für die Anbringung zusätzlicher elektrischer oder mechanischer Bauteile.

## Patentansprüche

1. Elektromotorischer Linearantrieb (10) mit wenigstens einem Antriebsmotor und mindestens zwei über die Drehzahl vermindernden Getrieben rotierend antreibbaren Spindeln, wobei die die Antriebszüge bildenden Bauteile in einem gemeinsamen, aus mindestens zwei Gehäuseteilen (11a, 11b) bestehenden Gehäuse (11) angeordnet sind, und daß das Gehäuse (11) in den Endbereichen U-förmige Aufnahmen aufweist, die zur Festlegung des elektromotorischen Linearantriebes von Schiebern (13, 14) übergriffen sind, und daß die Stromzuführung über ein Netzkabel (21) erfolgt, **dadurch gekennzeichnet, daß** zumindest die Stoßflächen der Gehäuseteile (11, 11b) des Gehäuses (11) mit Ausnahme der in den Endbereichen angeordneten U-förmigen Ausnehmungen vollständig umlaufend oder annähernd vollständig umlaufend durch ein Dichtelement oder durch mehrere Dichtelemente abgedichtet sind.

2. Elektromotorischer Linearantrieb nach Anspruch 1, **dadurch gekennzeichnet, daß** das Gehäuse (11) im Bereich der Schieber (13, 14) nach Art einer Labyrinthdichtung ausgelegt ist.

3. Elektromotorischer Linearantrieb nach Anspruch 1, **dadurch gekennzeichnet, daß** an den Gehäuseteilen (11a oder 11b) außenseitig Anschlußelemente für mechanische und/oder elektrische Bauteile an- oder eingesetzt oder angeformt sind.

4. Elektromotorischer Linearantrieb nach einem oder mehreren der vorhergehenden Ansprüche 1 bis 3, **dadurch gekennzeichnet, daß** das Netzkabel (21) an dem dem Gehäuse (11) zugewandten Ende auswechselbar ein elektrisches Verbindungselement, vorzugsweise einen Stecker (26) oder eine Kabelverschraubung trägt, und daß das elektrische Verbindungselement durch ein Befestigungselement (22) abgedeckt ist, welches lösbar, vorzugsweise durch Verschrauben mit der zugehörigen Gehäusewand des Gehäuseteils (11b) verbunden ist.

5. Elektromotorischer Linearantrieb nach Anspruch 4, **dadurch gekennzeichnet, daß** das Befestigungselement (22) einstückig, vorzugsweise durch Umspritzen mit dem Netzkabel (21) ausgebildet ist.

6. Elektromotorischer Linearantrieb nach Anspruch 4 oder 5, **dadurch gekennzeichnet, daß** das Befestigungselement (22) einen Erdungsanschluß, vorzugsweise eine Erdungsschraube (23) aufweist.

7. Elektromotorischer Linearantrieb nach einem oder mehreren der vorhergehenden Ansprüche 1 bis 6, **dadurch gekennzeichnet, daß** der Endbereich des Netzkabels (21) durch eine Kabelverschraubung mit dem Befestigungselement (22) verbunden ist.

8. Elektromotorischer Linearantrieb nach einem oder mehreren der vorhergehenden Ansprüche 1 bis 7, **dadurch gekennzeichnet, daß** das Befestigungselement (22) vorzugsweise in Fassungen eingesetzte elektrische Sicherungen derart abdeckt, daß nach dem Abnehmen des Befestigungselementes (22) die Sicherungen auswechselbar sind.

9. Elektromotorischer Linearantrieb nach einem oder mehreren der vorhergehenden Ansprüche 1 bis 8, **dadurch gekennzeichnet, daß** in wenigstens einem Gehäuseteil (11a, 11b) des Gehäuses (11) mindestens ein Durchbruch für die Aufnahme eines Kabels und/oder einer Kabelverschraubung und ggf. einer Zugentlastung vorgesehen ist.

10. Elektromotorischer Linearantrieb nach einem oder mehreren der vorhergehenden Ansprüche 1 bis 9, **dadurch gekennzeichnet, daß** wenigstens ein Gehäuseteil (11a, 11b) mit einer Kammer zur Aufnahme eines Akkumulators oder einer Batterie oder von Akkumulatoren oder von Batterien ausgestattet ist und daß jede Batterie oder jeder Akkumulator über ein vorzugsweise von außen ansteckbares Kabel oder eingesteckte Kontakte mit dem Antrieb elektrisch verbindbar ist.

11. Elektromotorischer Linearantrieb nach einem oder mehreren der vorhergehenden Ansprüche 1 bis 10, **dadurch gekennzeichnet, daß** wenigstens ein Gehäuseteil (11a, 11b) des Gehäuses mit einer Kammer zur Aufnahme eines Transformators, vorzugsweise eines EI-Kern-Transformators oder eines Ringkerntransformators ausgestattet ist.

12. Elektromotorischer Linearantrieb nach einem oder mehreren der vorhergehenden Ansprüche 1 bis 11, **dadurch gekennzeichnet, daß** wenigstens ein Gehäuseteil (11a, 11b) mit einer Kammer zur Aufnahme von mindestens einem elektrischen Gerät ausgestattet ist, vorzugsweise mit einem Gerät der Unterhaltungselektronik und/oder einem Sicherheitssensor, und daß das elektrische Gerät bzw. die elektrischen Geräte kraft- und/oder formschlüssig in der jeweiligen Kammer festlegbar ist.

13. Elektromotorischer Linearantrieb nach einem oder mehreren der vorhergehenden Ansprüche 1 bis 12, **dadurch gekennzeichnet, daß** wenigstens ein Gehäuseteil (11a, 11b) des Gehäuses (11) mit wenigstens einer Kammer zur Aufnahme einer Werkzeugbox, einer Ersatzteilbox, einem Servicepaket u.dgl. ausgestattet ist.

14. Elektromotorischer Linearantrieb nach einem oder mehreren der vorhergehenden Ansprüche 1 bis 13, **dadurch gekennzeichnet, daß** wenigstens ein Gehäuseteil (11a, 11b) des Gehäuses (11) mit einem Insektentöter ausgestattet ist.

15. Elektromotorischer Linearantrieb nach einem oder mehreren der vorhergehenden Ansprüche 1 bis 14, **dadurch gekennzeichnet, daß** der elektromotorische Linearantrieb (10) mit einem Diagnosesystem, vorzugsweise mit einem Diagnosestecker zum Anschluß eines Prüfgerätes ausgestattet ist.

16. Elektromotorischer Linearantrieb nach einem oder mehreren der vorhergehenden Ansprüche 1 bis 15, **dadurch gekennzeichnet, daß** der elektromotorische Linearantrieb (10) mit einem Anschluß für ein elektrisches Haushaltsgerät, beispielsweise einem Staubsauger ausgestattet ist.

17. Elektromotorischer Linearantrieb nach einem oder mehreren der vorhergehenden Ansprüche 1 bis 16, **dadurch gekennzeichnet, daß** der elektromotorische Linearantrieb (10) mit einer Programmiereinheit ausgestattet ist, die für einen Patienten unabhängig ist.

18. Elektromotorischer Linearantrieb nach einem oder mehreren der vorhergehenden Ansprüche 1 bis 17, **dadurch gekennzeichnet, daß** der elektromotorische Linearantrieb (10) mit einem Sicherheitspaket ausgestattet ist, beispielsweise mit einer Kohlendioxid-Patrone, einem Feuerlöscher u.dgl.

19. Elektromotorischer Linearantrieb nach einem oder mehreren der vorhergehenden Ansprüche 1 bis 18, **dadurch gekennzeichnet, daß** der elektromotorische Linearantrieb mit einem Behältnis zur Aufnahme eines Desinfektionsmittels, beispielsweise mit einer Spraydose ausgestattet ist.

20. Elektromotorischer Linearantrieb nach einem oder mehreren der vorhergehenden Ansprüche 1 bis 19, **dadurch gekennzeichnet, daß** der Linearantrieb mit einem Sprachchip und/oder einer Anzeige für Lärm, Geräusche, Licht u.dgl. ausgestattet ist.

21. Elektromotorischer Linearantrieb nach einem oder mehreren der vorhergehenden Ansprüche 1 bis 20, **dadurch gekennzeichnet, daß** der elektromotorische Linearantrieb bei einem Betrieb mit einem oder mehreren Akkumulatoren oder Batterien mit einer Spannungskontrolle ausgestattet ist.

22. Elektromotorischer Linearantrieb nach einem oder mehreren der vorhergehenden Ansprüche 1 bis 21, **dadurch gekennzeichnet, daß** der elektromotorische Linearantrieb (10) mit einem Luftzirkulationsgerät zur Wärmeabfuhr und ggf. auch zur Trocknung mit einer Heizung ausgestattet ist.

23. Elektromotorischer Linearantrieb nach einem oder mehreren der vorhergehenden Ansprüche 1 bis 22, **dadurch gekennzeichnet, daß** in wenigstens einem Gehäuseteil (11a oder 11b) des Gehäuses (11) eine Öffnung zum Hindurchführen eines den Antriebszug ausrückbaren Hebels oder eines Seils vorgesehen ist.

24. Elektromotorischer Linearantrieb nach Anspruch 1, **dadurch gekennzeichnet, daß** die beiden Gehäuseteile (11a, 11b) ganz oder teilweise mittels eines Dichtelementes, vorzugsweise mittels einer Rundschnurdichtung gegeneinander abgedichtet sind.

25. Elektromotorischer Linearantrieb nach Anspruch 1, **dadurch gekennzeichnet, daß** zumindest der den Schiebern (13,14) zugeordnete obere Bereich mittels einer die Stoßfuge übergreifenden Dichtstreifens, beispielsweise einem Klebestreifen abgedichtet ist.

26. Elektromotorischer Linearantrieb nach einem oder mehreren der vorhergehenden Ansprüche 1 bis 25, **dadurch gekennzeichnet, daß** an wenigstens einem Gehäuseteil (11a, 11b) des Gehäuses (11) nach außen vorstehende, vorzugsweise zylindrische Ansätze (17, 18) oder vorzugsweise annähernd zylindrische Ansätze vorgesehen sind, die an der dem Gehäuse (11) abgewandten Seite offen sind und durch verrastete Endkappen (19, 20) abgedeckt sind, und daß die Abdichtung der Endkappen (19,20) gegenüber den zylindrischen Ansätzen (17, 18) durch O-Ringe, durch eine Klebemasse oder dgl. erfolgt.

27. Elektromotorischer Linearantrieb nach einem oder mehreren der vorhergehenden Ansprüche 1 bis 26, **dadurch gekennzeichnet, daß** das Befestigungselement (22) für das Netzkabel (21) gegenüber der zugehörigen Wand des Gehäuseteils (11a, 11b) vorzugsweise durch Flachdichtung abgedichtet ist.

28. Elektromotorischer Linearantrieb nach einem oder mehreren der vorhergehenden Ansprüche 1 bis 27, **dadurch gekennzeichnet, daß** die elektrischen Verbindungselemente, beispielsweise die Stecker (26) gegenüber dem Gehäuseteil (11a, 11b) des Gehäuses durch Dichtelemente, vorzugsweise durch O-Ringe oder durch eine plastische Dichtmasse abgedichtet sind.

29. Elektromotorischer Linearantrieb nach einem oder mehreren der vorhergehenden Ansprüche 1 bis 28, **dadurch gekennzeichnet, daß** die Kabelabdeckung (27) an das Gehäuse (11) vorzugsweise durch Verschraubung festgelegt ist.

## Claims

1. Electric-motor linear drive (10) having at least one drive motor and at least two spindles which can be driven such that they rotate by means of transmissions which reduce the rotation speed, with the components which form the drive trains being arranged in a common housing (11) which comprises at least two housing parts (11a, 11b) and in that the housing (11) has U-shaped holders in the end areas, which are clasped by sliders (13, 14) in order to fix the electric-motor linear drive, and in that the electrical power supply is provided by a mains cable (21), **characterized in that** at least the abutting surfaces of the housing parts (11, 11b) of the housing (11) are sealed with the exception of the U-shaped recesses arranged in the end areas, completely circumferentially or approximately completely circumferentially by a sealing element or by a plurality of sealing elements.

2. Electric-motor linear drive according to Claim 1, **characterized in that** the housing (11) is in the form of a labyrinth seal in the area of the slides (13, 14).

3. Electric-motor linear drive according to Claim 1, **characterized in that** connecting elements for mechanical and/or electrical components are fitted to, inserted in or integrally formed on the outside of the housing parts (11a or 11b).

4. Electric-motor linear drive according to one or more of the preceding Claims 1 to 3, **characterized in that** the mains cable (21) is fitted, interchangeably, at its end facing the housing (11) with an electrical connection element, preferably a plug (26) or a cable screw union, and **in that** the electrical connection element is covered by an attachment element (22) which is detachably connected, preferably by means of screw unions, to the associated housing wall of the housing part (11b).

5. Electric-motor linear drive according to Claim 4, **characterized in that** the attachment element (22) is formed integrally, preferably by extrusion-coating with the mains cable (21).

6. Electric-motor linear drive according to Claim 4 or 5, **characterized in that** the attachment element (22) has an earthing connection, preferably an earthing screw (23).

7. Electric-motor linear drive according to one or more of the preceding Claims 1 to 6, **characterized in that** the end area of the mains cable (21) is connected to the attachment element (22) by means of a cable screw union.

8. Electric-motor linear drive according to one or more of the preceding Claims 1 to 7, **characterized in that** the attachment element (22) preferably covers electrical fuses, which are inserted into sockets, in such a way that the fuses can be replaced after the attachment element (22) has been removed.

9. Electric-motor linear drive according to one or more of the preceding Claims 1 to 8, **characterized in that** at least one aperture is provided in at least one housing part (11a, 11b) of the housing (11) in order to hold a cable and/or a cable screw union, and possibly a means for strain relief.

10. Electric-motor linear drive according to one or more of the preceding Claims 1 to 9, **characterized in that** at least one housing part (11a, 11b) is equipped with a chamber for holding a rechargeable battery, a battery, rechargeable batteries or batteries, and **in that** each battery or each rechargeable battery can be electrically connected to the drive via a cable, which can be preferably plugged on from the outside, or inserted contacts.

11. Electric-motor linear drive according to one or more of the preceding Claims 1 to 10, **characterized in that** at least one housing part (11a, 11b) of the housing is equipped with a chamber for holding a transformer, preferably an EI-core transformer or a toroidal core transformer.

12. Electric-motor linear drive according to one or more of the preceding Claims 1 to 11, **characterized in that** at least one housing part (11a, 11b) is equipped with a chamber for holding at least one electrical appliance, preferably with an appliance for entertainment electronics and/or a safety sensor and **in that** the electrical appliance or the electrical appliances can be fixed in the respective chamber with a force fit and/or in an interlocking manner.

13. Electric-motor linear drive according to one or more of the preceding Claims 1 to 12, **characterized in that** at least one housing part (11a, 11b) of the housing (11) is equipped with at least one chamber for holding a toolbox, a spare-parts box, a service pack etc.

14. Electric-motor linear drive according to one or more of the preceding Claims 1 to 13, **characterized in that** at least one housing part (11a, 11b) of the housing (11) is equipped with a means of killing insects.

15. Electric-motor linear drive according to one or more of the preceding Claims 1 to 14, **characterized in that** the electric-motor linear drive (10) is equipped with a diagnosis system, preferably with a diagnosis plug for connection of a test set.

16. Electric-motor linear drive according to one or more of the preceding Claims 1 to 15, **characterized in that** the electric-motor linear drive (10) is equipped with a connection for an electrical domestic appliance, for example a vacuum cleaner.

17. Electric-motor linear drive according to one or more of the preceding Claims 1 to 16, **characterized in that** the electric-motor linear drive (10) is equipped with a programming unit which is independent of a patient.

18. Electric-motor linear drive according to one or more of the preceding Claims 1 to 17, **characterized in that** the electric-motor linear drive (10) is equipped with a safety pack, for example with a carbon-dioxide cartridge, a fire extinguisher or the like.

19. Electric-motor linear drive according to one or more of the preceding Claims 1 to 18, **characterized in that** the electric-motor linear drive is equipped with a container for holding a disinfectant, for example with a spray can.

20. Electric-motor linear drive according to one or more of the preceding Claims 1 to 19, **characterized in that** the linear drive is equipped with a speech chip and/or an indication for noise, light or the like.

21. Electric-motor linear drive according to one or more of the preceding Claims 1 to 20, **characterized in that** the electric-motor linear drive is equipped, during operation, with one or more rechargeable batteries or batteries with a voltage monitor.

22. Electric-motor linear drive according to one or more of the preceding Claims 1 to 21, **characterized in that** the electric-motor linear drive (10) is equipped with an air circulation appliance for heat dissipation, and, possibly, also with a heater for drying.

23. Electric-motor linear drive according to one or more of the preceding Claims 1 to 22, **characterized in that** an opening for a lever, which can disengage the drive train, or for a cable to pass through is provided in at least one housing part (11a or 11b) of the housing (11).

24. Electric-motor linear drive according to Claim 1, **characterized in that** the two housing parts (11a, 11b) are entirely or partially sealed from one another by means of a sealing element, preferably by means of a toroidal sealing ring.

25. Electric-motor linear drive according to Claim 1, **characterized in that** at least the upper area, associated with the sliders (13, 14) is sealed by means of a sealing strip which clasps the abutment joint, for example an adhesive step.

26. Electric-motor linear drive according to one or more of the preceding Claims 1 to 25, **characterized in that** preferably cylindrical attachments (17, 18), which project outwards, or preferably approximately cylindrical attachments, are provided on at least one housing part (11a, 11b) of the housing (11), are open on the side facing away from the housing (11) and are covered by latched end caps (19, 20), and **in that** the end caps (19, 20) are sealed with respect to the cylindrical attachments (17, 18) by means of 0-rings, by means of an adhesive compound, or the like.

27. Electric-motor linear drive according to one or more of the preceding Claims 1 to 26, **characterized in that** the attachment element (22) for the mains cable (21) is sealed, preferably by means of a flat seal, from the associated wall of the housing part (11a, 11b).

28. Electric-motor linear drive according to one or more of the preceding Claims 1 to 27, **characterized in that** the electrical connection elements, preferably the plugs (26), are sealed from the housing part (11a, 11b) of the housing by means of sealing elements, preferably by means of O-rings or by means of a plastic sealing compound.

29. Electric-motor linear drive according to one or more of the preceding Claims 1 to 28, **characterized in that** the cable cover (27) is fixed to the housing (11), preferably by means of a screw union.

## Revendications

1. Actionneur linéaire (10) électromoteur comprenant au moins un moteur d'entraînement et au moins deux broches pouvant être entraînées de façon rotative par des engrenages réduisant le régime, les composants formant les dispositifs de traction d'entraînement étant disposés dans un boîtier (11) commun, constitué d'au moins deux parties de boîtier (11a, 11b), et en ce que le boîtier (11) présente dans les zones d'extrémité des logements en U, qui sont recouverts par des coulisseaux (13, 14) pour la fixation de l'actionneur linéaire électromoteur, et en ce que l'arrivée de courant s'effectue par un câble d'alimentation (21), **caractérisé en ce qu'**au moins les surfaces de jonction des parties de boîtier (11, 11b) du boîtier (11) sont étanchéifiées de façon complètement périphérique ou approximativement complètement périphérique par un élément d'étanchéité ou par plusieurs éléments d'étanchéité, à l'exception des évidements en U disposés dans les zones d'extrémité.

2. Actionneur linéaire électromoteur selon la revendication 1, **caractérisé en ce que** le boîtier (11) est conçu dans la zone des coulisseaux (13, 14) à la façon d'un joint à labyrinthe.

3. Actionneur linéaire électromoteur selon la revendication 1, **caractérisé en ce que** des éléments de raccordement pour des composants mécaniques et/ou électriques sont placés sur ou dans ou formés sur les parties de boîtier (11a ou 11b) côté extérieur.

4. Actionneur linéaire électromoteur selon l'une quelconque ou plusieurs des revendications 1 à 3 précédentes, **caractérisé en ce que** le câble d'alimentation (21) porte sur l'extrémité, tournée vers le boîtier (11), de façon amovible un élément de liaison électrique de préférence une fiche (26) ou un assemblage vissé de câble, et **en ce que** l'élément de liaison électrique est recouvert par un élément de fixation (22), qui est relié de façon amovible, de préférence par vissage, à la paroi de boîtier correspondante de la partie de boîtier (11b).

5. Actionneur linéaire électromoteur selon la revendication 4, **caractérisé en ce que** l'élément de fixation (22) est conçu d'une seule pièce, de préférence par surmoulage avec le câble d'alimentation (21).

6. Actionneur linéaire électromoteur selon la revendication 4 ou 5, **caractérisé en ce que** l'élément de fixation (22) présente un raccordement de mise à la terre, de préférence une vis de mise à la terre (23).

7. Actionneur linéaire électromoteur selon l'une quelconque ou plusieurs des revendications précédentes 1 à 6, **caractérisé en ce que** la zone d'extrémité du câble d'alimentation (21) est reliée par un assemblage vissé de câble à l'élément de fixation (22).

8. Actionneur linéaire électromoteur selon l'une quelconque ou plusieurs des revendications précédentes 1 à 7, **caractérisé en ce que** l'élément de fixation (22) recouvre des fusibles électriques installés de préférence dans des douilles de telle sorte que celles-ci peuvent être remplacées après l'enlèvement de l'élément de fixation (22).

9. Actionneur linéaire électromoteur selon l'une quelconque ou plusieurs des revendications précédentes 1 à 8, **caractérisé en ce que** dans au moins une partie de boîtier (11a, 11b) du boîtier (11) est prévu au moins un passage pour la réception d'un câble et/ou d'un assemblage vissé de câble et éventuellement d'une décharge de traction.

10. Actionneur linéaire électromoteur selon l'une quelconque ou plusieurs des revendications précédentes 1 à 9, **caractérisé en ce qu'**au moins une partie de boîtier (11a, 11b) est équipée d'une chambre pour le logement d'un accumulateur ou d'une batterie ou d'accumulateurs ou de batteries et **en ce que** chaque batterie ou chaque accumulateur peut être relié électriquement par un câble enfichable de préférence par l'extérieur ou par des contacts enfichés.

11. Actionneur linéaire électromoteur selon l'une quelconque ou plusieurs des revendications précédentes 1 à 10, **caractérisé en ce qu'**au moins une partie de boîtier (11a, 11b) du boîtier est équipée d'une chambre pour le logement d'un transformateur, de préférence d'un transformateur à noyau El ou d'un transformateur toroïdal.

12. Actionneur linéaire électromoteur selon l'une quelconque ou plusieurs des revendications précédentes 1 à 11, **caractérisé en ce qu'**au moins une partie de boîtier (11a, 11b) est équipée d'une chambre pour le logement d'au moins un appareil électrique, de préférence d'un appareil d'électronique d'entretien et/ou d'un capteur de sécurité, et **en ce que** l'appareil électrique ou les appareils électriques peuvent être fixés par adhérence et/ou par complémentarité de formes dans la chambre respective.

13. Actionneur linéaire électromoteur selon l'une quelconque ou plusieurs des revendications précédentes 1 à 12, **caractérisé en ce qu'**au moins une partie de boîtier (11a, 11b) du boîtier (11) est équipée d'au moins une chambre pour le logement d'un boîtier d'outil, d'un boîtier pour pièces de rechange, d'un ensemble S.A.V. et similaires.

14. Actionneur linéaire électromoteur selon l'une quelconque ou plusieurs des revendications précédentes 1 à 13, **caractérisé en ce qu'**au moins une partie de boîtier (11a, 11b) du boîtier (11) est équipée d'un insecticide.

15. Actionneur linéaire électromoteur selon l'une quelconque ou plusieurs des revendications précédentes 1 à 14, **caractérisé en ce que** l'entraînement linéaire (10) électromoteur est équipé d'un système de diagnostic, de préférence d'une fiche de diagnostic pour le raccordement d'un appareil de test.

16. Actionneur linéaire électromoteur selon l'une quelconque ou plusieurs des revendications précédentes 1 à 15, **caractérisé en ce que** l'actionneur linéaire (10) électromoteur est équipé d'un branchement pour un appareil ménager électrique, par exemple un aspirateur.

17. Actionneur linéaire électromoteur selon l'une quelconque ou plusieurs des revendications précédentes 1 à 16, **caractérisé en ce que** l'actionneur linéaire (10) électromoteur est équipé d'une unité de programmation qui est indépendante pour un patient.

18. Actionneur linéaire électromoteur selon l'une quelconque ou plusieurs des revendications précédentes 1 à 17, **caractérisé en ce que** l'actionneur linéaire (10) électromoteur est équipé d'un ensemble de sécurité, par exemple d'une cartouche à dioxyde de carbone, un extincteur et similaires.

19. Actionneur linéaire électromoteur selon l'une quelconque ou plusieurs des revendications précédentes 1 à 18, **caractérisé en ce que** l'actionneur linéaire électromoteur est équipé d'un récipient pour le logement d'un désinfectant, par exemple d'une bombe aérosol.

20. Actionneur linéaire électromoteur selon l'une quelconque ou plusieurs des revendications précédentes 1 à 19, **caractérisé en ce que** l'actionneur linéaire est équipé d'une puce de parole et/ou d'un affichage pour bruits, lumière et similaires.

21. Actionneur linéaire électromoteur selon l'une quelconque ou plusieurs des revendications précédentes 1 à 20, **caractérisé en ce que** l'actionneur linéaire électromoteur est équipé lors d'un fonctionnement d'un ou plusieurs accumulateurs ou batteries avec un contrôle de tension.

22. Actionneur linéaire électromoteur selon l'une quelconque ou plusieurs des revendications précédentes 1 à 21, **caractérisé en ce que** l'actionneur linéaire (10) électromoteur est équipé d'un appareil de circulation d'air pour l'évacuation de chaleur et éventuellement également d'un chauffage pour le séchage.

23. Actionneur linéaire électromoteur selon l'une quelconque ou plusieurs des revendications précédentes 1 à 22, **caractérisé en ce qu'**une ouverture pour le passage et le guidage d'un levier pouvant débrailler le dispositif de traction d'entraînement ou d'un câble est prévu dans au moins une partie de boîtier (11a ou 11b) du boîtier (11).

24. Actionneur linéaire électromoteur selon la revendication 1, **caractérisé en ce que** les deux parties du boîtier (11a, 11b) sont étanchéifiées l'une par rapport à l'autre tout ou partiellement au moyen d'un élément d'étanchéité, de préférence au moyen d'un joint torique.

25. Actionneur linéaire électromoteur selon la revendication 1, **caractérisé en ce qu'**au moins la zone supérieure, attribuée aux coulisseaux (13, 14), est rendue étanche au moyen d'une bande d'étanchéité recouvrant le joint montant, par exemple une bande collante.

26. Actionneur linéaire électromoteur selon l'une quelconque ou plusieurs des revendications précédentes 1 à 25, **caractérisé en ce que** sur au moins une partie de boîtier (11a, 11b) du boîtier (11) sont prévus des rebords (17, 18) débordant à l'extérieur, de préférence cylindriques ou des rebords de préférence approximativement cylindriques, qui sont ouverts sur le côté opposé au boîtier (11) et sont recouverts par des capuchons d'extrémité (19, 20), et **en ce que** l'étanchéité des capuchons d'extrémité (19, 20) par rapport aux rebords (17, 18) cylindriques s'effectue par des joints toriques, par une masse collante ou similaire.

27. Actionneur linéaire électromoteur selon l'une quelconque ou plusieurs des revendications précédentes 1 à 26, **caractérisé en ce que** l'élément de fixation (22) pour le câble d'alimentation (21) est rendu étanche par rapport à la paroi correspondante de la partie de boîtier (11a, 11b) de préférence par un joint plat.

28. Actionneur linéaire électromoteur selon l'une quelconque ou plusieurs des revendications précédentes 1 à 27, **caractérisé en ce que** les éléments de liaison électriques, par exemple les fiches (26) sont rendues étanches par rapport à la partie de boîtier (11a, 11b) du boîtier par des éléments d'étanchéité, de préférence par des joints toriques ou par une masse étanche plastique.

29. Actionneur linéaire électromoteur selon l'une quelconque ou plusieurs des revendications précédentes 1 à 28, **caractérisé en ce que** la couverture de câble (27) sur le boîtier (11) est fixée de préférence par vissage.
